# EUROPEAN PATENT SPECIFICATION

(11) **EP 3 006 969 B1**
(45) Date of publication and mention of the grant of the patent: **10.04.2019**
(21) Application number: 14807159.0
(22) Date of filing: 26.05.2014
(51) Int. Cl.: G02B 1/115, B32B 7/02, G02B 1/118

(54) **OPTICAL MEMBER PROVIDED WITH ANTI-REFLECTION FILM**
OPTISCHES ELEMENT MIT ANTIREFLEXFILM
ÉLÉMENT OPTIQUE DOTÉ D'UN FILM ANTIREFLET

(30) Priority: 03.06.2013 JP 2013116716
(43) Date of publication of application: 13.04.2016
(73) Proprietor: FUJIFILM Corporation, Tokyo 106-8620 (JP)
(72) Inventor: YOSHIHIRO, Tatsuya, Ashigarakami-gun, Kanagawa 258-8577 (JP); SONODA, Shinichiro, Ashigarakami-gun, Kanagawa 258-8577 (JP)
(74) Representative: Klunker IP Patentanwälte PartG mbB
(86) International application number: PCT/JP2014/002748
(87) International publication number: WO 2014/196148

(56) References cited:
- WO-A1-2012/157719
- WO-A2-2009/120983
- JP-A- 2002 006 108
- JP-A- 2004 012 657
- JP-A- 2006 259 711
- JP-A- 2010 078 803
- JP-A- 2012 181 293
- JP-A- 2013 033 241
- JP-A- 2013 257 405
- JP-A- 2014 081 522

## Description

### BACKGROUND OF THE INVENTION

### 1. Field of the Invention

The present invention relates to an optical member according to the preamble of claim 1 and claim 2. This optical member is provided with an anti-reflection film on a surface thereof.

### 2. Description of the Related Art

In the past, in a lens (transparent substrate) using a translucent member such as glass or plastic, an anti-reflection structure (anti-reflection film) is provided on a light incident surface in order to reduce loss of transmitted light caused by surface reflection.

For example, as the anti-reflection structure for visible light, a dielectric material multilayer film, a fine uneven structure (so-called moth-eye structure) with a shorter pitch than a wavelength of visible light, and the like have been known (JP2005-275372A, JP2010-66704A, and JP2013-33241A and the like).

JP2005-275372A discloses a configuration in which a fine uneven film is formed on a substrate with a transparent thin film layer interposed therebetween. The uneven film is made of alumina as a main component, and the transparent thin film layer is a layer that contains at least one of zirconia, silica, titania, and zinc oxide.

JP2010-66704A discloses a configuration in which an uneven structure layer is formed on a substrate with interlayers interposed therebetween. The interlayer is a material different from that of the uneven structure layer. A layer adjacent to the uneven structure layer among the interlayers has substantially the same refractive index as a refractive index of the uneven structure layer.

An optical member according to the preamble of claim 1 or claim 2 is known from WO 2012/157719 A1.

Generally, a refractive index of a material forming a fine uneven structure is different from a refractive index of a transparent substrate. Accordingly, when the material is used for anti-reflection of the transparent substrate, it is necessary to make a study of preventing a refractive index level difference from occurring between the anti-reflection structure and the transparent substrate. Specifically, the following methods have been known: a method of mixing high refractive compounds in the transparent thin film layer as described in JP2005-275372A; a method of providing the interlayer that has a refractive index which is at a medium between refractive indexes of the thin film layer and the substrate as described in JP2010-66704A; and a method of providing the refractive index gradient thin film layer of which a refractive index changes stepwise in a film thickness direction from the fine uneven structure toward the substrate as described in JP2013-33241A.

### SUMMARY OF THE INVENTION

When the fine uneven structure is provided as the anti-reflection structure, a problem arises in that, as a height (depth) of the fine unevenness becomes large, a structural durability becomes worse. In particular, when the fine uneven structure is formed of an uneven film made of alumina such as boehmite as a main component, it is difficult to increase the height (depth) of the fine unevenness.

Inventors of the present invention and the like found that, if a rate of change in refractive index of the fine uneven structure becomes rapid, reflected light remains, and it is not possible to obtain sufficient anti-reflection performance.

As described above, for anti-reflection of the substrate, an anti-reflection structure (anti-reflection film) made of a material with a refractive index different from that of the substrate is provided. At this time, in an example of the related art, in order to reduce a difference between both refractive indexes of the substrate and the anti-reflection structure, the interlayer, which has a refractive index between both of them, or the refractive index gradient thin film, of which a refractive index changes stepwise, is used. However, in order to obtain sufficient performance, it is necessary to extremely increase a film thickness of the interlayer or the refractive index gradient thin film layer. The increase in film thickness has a problem in that the increase leads to an increase in manufacturing time period and an increase in cost of manufacturing and thus this is not appropriate for manufacturing. As a result of examination of the inventors of the present invention and the like, the inventors found that it can't be said that the effect of preventing reflected light from occurring when the fine uneven structure has a portion, in which the rate of change in refractive index is rapid, only by providing the interlayer for reducing the difference between both refractive indexes of the substrate and the anti-reflection structure.

The present invention has been made in consideration of the above-mentioned situation, and has an object to provide an optical member that is appropriate for manufacturing and is provided with an anti-reflection film with sufficient optical characteristics.

An optical member of the present invention is characterized to include the features of claim 1 or claim 2.

That is, in the optical member of the present invention, it is assumed that, in the thickness direction, a boundary position between the refractive index gradient structure layer and the interference layer is z₁, and a boundary position between the interference layer and the transparent substrate is z₂. In addition, it is assumed that, at the position z₁, the refractive index of the refractive index gradient structure layer is n₁(z₁), and the refractive index of the interference layer is n₂(z₁). It is also assumed that, at the position z₂, the refractive index of the interference layer is n₂(z₂), and the refractive index of the transparent substrate is n₃. Under the assumptions, n₁(z₁)≠n₃, n₁(z₁)≠n₂(z₁), n₂(z₂)≠n₃, and n₂(z₁)≠n₂(z₂).

In particular, the refractive index of the transparent substrate is larger than the refractive index of the refractive index gradient structure layer on the side closest to the transparent substrate (n₁(z₁)<n₃). In addition, in the interference layer, a refractive index at the boundary position between the interference layer and the refractive index gradient structure layer is larger than a refractive index at the boundary position between the interference layer and the transparent substrate (n₂(z₁)>n₂(z₂)).

Alternatively, the refractive index of the transparent substrate is smaller than the refractive index of the refractive index gradient structure layer on the side closest to the transparent substrate (n₁(z₁)>n₃). In addition, in the interference layer, a refractive index at the boundary position between the interference layer and the refractive index gradient structure layer is smaller than a refractive index at the boundary position between the interference layer and the transparent substrate (n₂(z₁)<n₂(z₂)).

When the refractive index gradient structure layer has a part in which a relationship between a rate of change in refractive index Δn/Δd in the thickness direction and a wavelength of not-to-be-reflected light λ satisfies λ×Δn/Δd>1.5, the present invention is particularly effective.

The not-to-be-reflected light is light to be prevented from being reflected in the optical member of the present invention, and may be, for example, visible light, infrared light, or the like in accordance with an intended purpose.

It is preferable that the interference layer is formed of three or more elements, a ratio of composition of the elements changes in the thickness direction, and the refractive index thereof changes in the thickness direction.

Specifically, the interference layer may be formed of silicon oxynitride, a ratio of composition of oxygen and nitrogen may change in the thickness direction, and the refractive index thereof may change in the thickness direction.

Alternatively, the interference layer may be a layer in which silicon oxide and titanium oxide are mixed, a content ratio between the silicon oxide and the titanium oxide may change in the thickness direction, and the refractive index thereof may change in the thickness direction.

The refractive index gradient structure layer may be formed of a transparent fine uneven structure which has fine unevenness with a pitch shorter than the wavelength of not-to-be-reflected light.

The refractive index gradient structure layer may be formed of a transparent fine uneven structure which has fine unevenness with a period shorter than the wavelength of not-to-be-reflected light.

The refractive index gradient structure layer may be formed of a refractive index gradient thin film of which a refractive index monotonically increases in a direction from a position far from the transparent substrate toward a position close to the transparent substrate.

The refractive index gradient structure layer may be formed of a particulate layer in which transparent particulates with smaller sizes than the wavelength of not-to-be-reflected light are randomly arranged.

The optical member of the present invention has a refractive index profile in which the refractive index thereof is discrete at the boundary between the refractive index gradient structure layer and the interference layer and at the boundary between the interference layer and the substrate. Since the optical member has boundaries at which two refractive indexes are discrete, reflected light of the not-to-be-reflected light, which is generated by the difference between the refractive indexes between the refractive index of the substrate and the refractive index of the refractive index gradient structure layer on the side closest to the substrate, reflected light, which is generated when there is a rapid refractive index change in the refractive index gradient structure layer, and the like are made to interfere, thereby extremely reducing light reflected toward the outside of the optical member of the not-to-be-reflected light which is incident from the surface of the refractive index gradient structure layer.

### BRIEF DESCRIPTION OF THE DRAWINGS

Fig. 1 is a schematic sectional view illustrating a configuration of an optical member of the present invention.
Fig. 2 is a diagram illustrating a first example of a refractive index profile of the optical member of the present invention.
Fig. 3 is a diagram illustrating a modification example of the design of the first example of the refractive index profile of the optical member of the present invention.
Fig. 4 is a diagram illustrating a second example of the refractive index profile of the optical member of the present invention.
Fig. 5 is a diagram illustrating a modification example of the design of the second example of the refractive index profile of the optical member of the present invention.
Fig. 6 is a diagram illustrating a third example of the refractive index profile of the optical member not falling under the scope of the present invention.
Fig. 7 is a diagram illustrating a fourth example of the refractive index profile of the optical member not falling under the scope of the present invention.
Fig. 8 is a schematic sectional view illustrating a first embodiment of the optical member.
Fig. 9 is a schematic sectional view illustrating a second embodiment of the optical member.
Fig. 10 is a schematic perspective view illustrating a third embodiment of the optical member.
Fig. 11 is a schematic sectional view illustrating a fourth embodiment of the optical member.
Fig. 12A is a diagram illustrating refractive index profiles and simulation results of reflectances.
Fig. 12B is diagram illustrating refractive index profiles and simulation results of reflectances.
Fig. 12C is diagram illustrating refractive index profiles and simulation results of reflectances.
Fig. 13 is a diagram illustrating a refractive index profile of an optical member of Comparative Example 1.
Fig. 14 is a diagram illustrating an optical simulation result of a gradient film thickness and a reflectance to light with a wavelength of 540 nm in the optical member of Comparative Example 1.
Fig. 15 is a diagram illustrating a refractive index profile of an optical member of Example 1.
Fig. 16 is a diagram illustrating a refractive index profile of an optical member of Example 2.
Fig. 17 is a diagram illustrating a refractive index profile of an optical member of Comparative Example 2.
Fig. 18 is a diagram illustrating simulation results of reflectances of Example 1, Example 2 and Comparative Example 2.
Fig. 19 is a diagram illustrating a refractive index profile of an optical member of Example 3.
Fig. 20 is a diagram illustrating a refractive index profile of an optical member of Comparative Example 3.
Fig. 21 is a diagram illustrating simulation results of reflectances of Example 3 and Comparative Example 3.

### DESCRIPTION OF THE PREFERRED EMBODIMENTS

Hereinafter, embodiments of the present invention will be described.

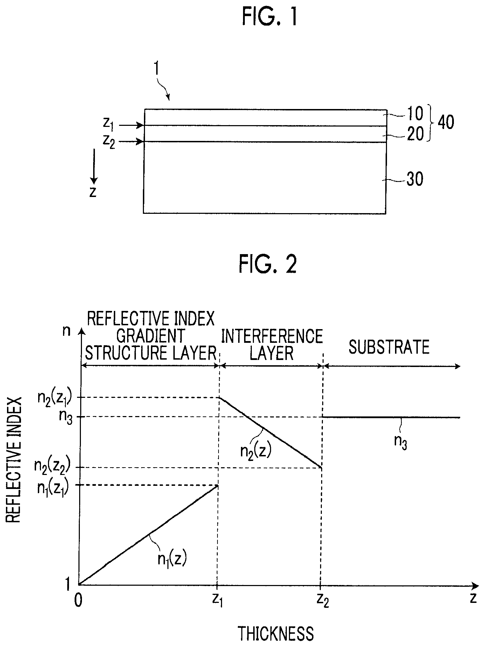

Fig. 1 is a schematic sectional view illustrating a configuration of an optical member 1 of the present invention. As shown in Fig. 1, the optical member 1 includes a transparent substrate 30, and an anti-reflection film 40 that is formed on a surface of the transparent substrate 30. The anti-reflection film 40 includes a refractive index gradient structure layer 10 of which a refractive index gradually increases in a direction from the surface toward the substrate 30, and an interference layer 20 which is provided between the refractive index gradient structure layer 10 and the transparent substrate 30 in order to prevent light from being reflected through interference.

The optical member 1 is characterized as follows. A refractive index of the transparent substrate 30 is different from a refractive index of the refractive index gradient structure layer 10 on a side closest to the transparent substrate 30. A refractive index of the interference layer 20 changes in the thickness direction, and has values which are discrete from both refractive indexes of the refractive index gradient structure layer 10 and the transparent substrate 30 at a boundary between the interference layer 20 and the refractive index gradient structure layer 10 and at a boundary between the interference layer 20 and the transparent substrate 30. A value thereof on a side close to the refractive index gradient structure layer 10 is different from a value thereof on a side close to the transparent substrate 30.

That is, in the optical member 1 of the present invention, it is assumed that, in the thickness direction, a boundary position between the refractive index gradient structure layer 10 and the interference layer 20 is z₁, and a boundary position between the interference layer 20 and the transparent substrate 30 is z₂. In addition, it is assumed that, at the position z₁, the refractive index of the refractive index gradient structure layer 10 (the refractive index of the refractive index gradient structure layer on the side closest to the transparent substrate) is n₁(z₁), and the refractive index of the interference layer 20 (the refractive index of the interference layer 20 on the side closest to the refractive index gradient structure layer 10) is n₂(z₁). It is also assumed that, at the position z₂, the refractive index of the interference layer 20 (the refractive index of the interference layer 20 on the side closest to the substrate 30) is n₂(z₂), and the refractive index of the transparent substrate 30 is n₃. Under the assumptions, n₁(z₁)≠n₃, n₁(z₁)≠n₂(z₁), n₂(z₂)≠n₃, and n₂(z₁)≠n₂(z₂).

In the optical member of the present invention, the refractive index profile is discrete at the boundary position z₁ between the refractive index gradient structure layer 10 and the interference layer 20 and at the boundary position z₂ between the interference layer 20 and the transparent substrate 30. In addition, in the interference layer 20, a refractive index changes in the thickness direction. Thus, reflected light, which is generated inside the anti-reflection film 40, and reflected light, which is generated between the anti-reflection film 40 and the substrate 30, are made to interfere with each other. As a result, the not-to-be-reflected light, which is incident into the optical member, is prevented from being reflected.

Fig. 2 shows a first example of a refractive index profile of the optical member of the present invention.

In the refractive index profile shown in Fig. 2, the refractive index n₃ of the transparent substrate 30 is larger than the refractive index n₁(z₁) of the refractive index gradient structure layer 10 on the side closest to the transparent substrate. In the interference layer 20, the refractive index n₂(z₁) at the boundary position z₁ between the refractive index gradient structure layer 10 and the interference layer 20 is larger than the refractive index n₂(z₂) at the boundary position z₂ between the interference layer 20 and the transparent substrate 30. Consequently, n₁(z₁)<n₃, and, n₂(z₁)>n₂(z₂).

The refractive indexes of the layers at the boundary positions z₁ and z₂ are discrete. In the present example, at the boundary position z₁, the refractive index of the interference layer 20 is larger than the refractive index n₁(z₁) of the refractive index gradient structure layer 10 on the side closest to the transparent substrate, and becomes smaller at a position closer to the thickness direction transparent substrate. At the boundary position z₂, the refractive index of the interference layer 20 becomes smaller than the refractive index n₃ of the transparent substrate 30.

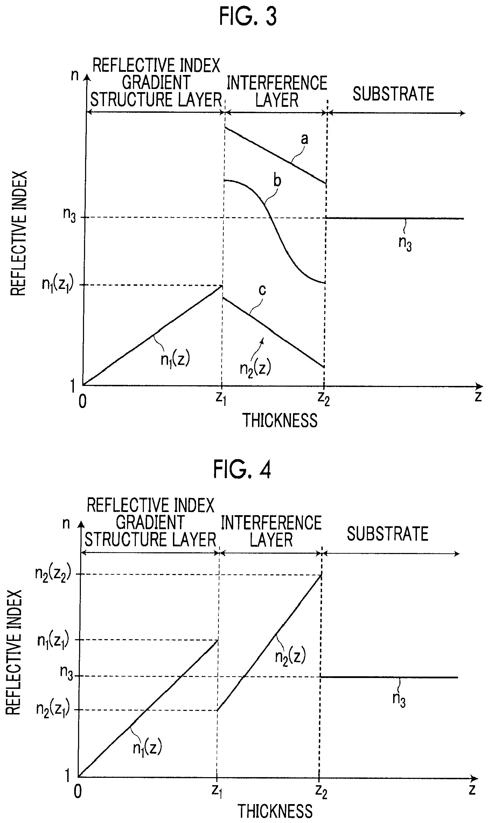

Fig. 3 shows a modification example of the design of the first example of the refractive index profile of the optical member of the present invention.

Similar to the above-mentioned refractive index profile of the first example, in the refractive index profile shown in Fig. 3, refractive index relationships at the boundary positions satisfy n₂(z₂)≠n₃, n₂(z₁)≠n₂(z₂), n₁(z₁)<n₃, and n₂(z₁)>n₂(z₂). When these conditions are satisfied, the interference layer 20 is not limited to the first example shown in Fig. 2, and may have a refractive index profile n₂(z) shown in Fig. 3.

At the boundary position z₁, the profile a of the refractive index profiles n₂(z) of the interference layer shown in Fig. 3 is larger than the refractive index n₁(z₁) of the refractive index gradient structure layer 10 on the side closest to the transparent substrate, and becomes smaller at a position closer to the thickness direction transparent substrate. At the boundary position z₂, a is larger than the refractive index n₃ of the transparent substrate 30.

In a manner similar to that of the first example, at the boundary position z₁, the profile b is larger than the refractive index n₁(z₁) of the refractive index gradient structure layer 10 on the side closest to the transparent substrate, and becomes smaller at a position closer to the thickness direction transparent substrate. At the boundary position z₂, the profile b is smaller than the refractive index n₃ of the transparent substrate 30. Here, the refractive index is not reduced with a constant slope but gently changes in the vicinity of the boundaries and rapidly changes at the center.

At the boundary position z₁, the profile c is smaller than the refractive index n₁(z₁) of the refractive index gradient structure layer 10 on the side closest to the transparent substrate, and becomes smaller at a position closer to the thickness direction transparent substrate. At the boundary position z₂, the profile is smaller than the refractive index of the transparent substrate 30.

When the refractive index relationship at the boundary positions is satisfied, it is not necessary for the change in refractive index of the interference layer in the thickness direction to be a monotonic decrease, and the change may be a profile with increasing and decreasing. In addition, it is preferable that, at the boundary position z₁ or z₂, the difference between the refractive indexes has a magnitude which is substantially enough to cancel the reflected light generated when there is a rapid refractive index change in the refractive index gradient structure layer. For example, reflection of 1% may be caused by the rapid refractive index change in the refractive index gradient structure layer. In this case, it is preferable to set a difference between the refractive indexes with substantially the same reflection intensities at the boundary positions z₁ and z₂. For example, when the refractive index of the substrate is 1.84, in order to obtain a reflection intensity of 1%, the difference between the refractive indexes of about 0.3 is necessary.

Fig. 4 shows a second example of the refractive index profile of the optical member of the present invention.

In the refractive index profile shown in Fig. 4, the refractive index of the transparent substrate 30 is smaller than the refractive index n₁(z₁) of the refractive index gradient structure layer 10 on the side closest to the transparent substrate 30. In the interference layer 20, the refractive index n₂(z₁) at the boundary position z₁ between the refractive index gradient structure layer 10 and the interference layer 20 is smaller than the refractive index n₂(z₂) at the boundary position z₂ between the interference layer 20 and the transparent substrate 30. Consequently, n₁(z₁)>n₃, and n₂(z₁)<n₂(z₂).

The refractive indexes of the layers at the boundary positions z₁ and z₂ are discrete. In the present example, at the boundary position z₁, the refractive index of the interference layer 20 is smaller than the refractive index n₁(z₁) of the refractive index gradient structure layer 10 on the side closest to the transparent substrate, and becomes larger at a position closer to the thickness direction transparent substrate. At the boundary position z₂, the refractive index of the interference layer 20 becomes larger than the refractive index of the transparent substrate 30.

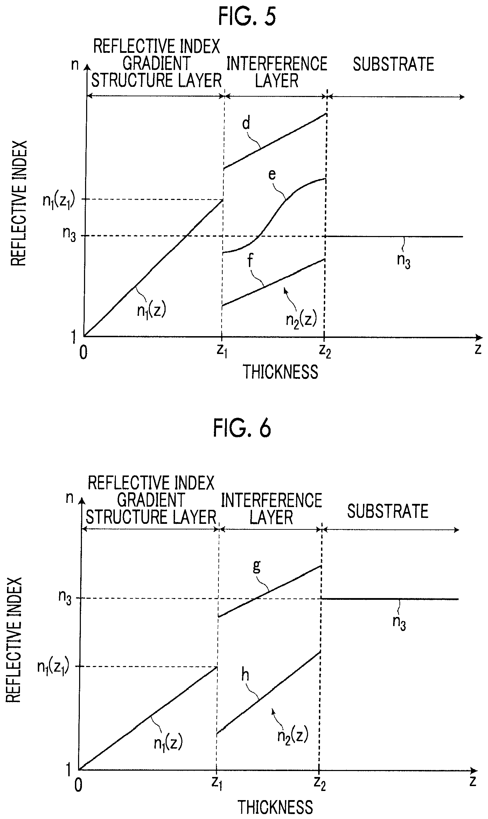

Fig. 5 shows a modification example of the design of the second example of the refractive index profile of the optical member of the present invention.

Similar to the above-mentioned refractive index profile of the second example, in the refractive index profile shown in Fig. 5, refractive index relationships at the boundary positions satisfy n₂(z₂)≠n₃, n₂(z₁)≠n₂(z₂), n₁(z₁)>n₃, and n₂(z₁)<n₂(z₂). When these conditions are satisfied, the interference layer 20 is not limited to the second example shown in Fig. 4, and may have the refractive index profile shown in Fig. 5.

At the boundary position z₁, the profile d of the refractive index profiles n₂(z) of the interference layer shown in Fig. 5 is larger than the refractive index n₁(z₁) of the refractive index gradient structure layer 10 on the side closest to the transparent substrate, and becomes larger at a position closer to the thickness direction transparent substrate. At the boundary position z₂, d is larger than the refractive index of the transparent substrate 30.

In a manner similar to that of the second example, at the boundary position z₁, the profile e is smaller than the refractive index n₁(z₁) of the refractive index gradient structure layer 10 on the side closest to the transparent substrate, and becomes larger at a position closer to the thickness direction transparent substrate. At the boundary position z₂, the profile e is larger than the refractive index of the transparent substrate 30. Here, the refractive index does not increase with a constant slope but gently changes in the vicinity of the boundaries and rapidly changes at the center.

At the boundary position z₁, the profile f is smaller than the refractive index n₁(z₁) of the refractive index gradient structure layer 10 on the side closest to the transparent substrate, and becomes larger at a position closer to the thickness direction transparent substrate. At the boundary position z₂, the profile f is smaller than the refractive index of the transparent substrate 30.

When the refractive index relationship at the boundary positions is satisfied, it is not necessary for the change in refractive index of the interference layer in the thickness direction to be a monotonic increase, and the change may be a profile with increasing and decreasing. In addition, it is preferable that, at the boundary position z₁ or z₂, the difference between the refractive indexes has a magnitude which is substantially enough to cancel the reflected light generated when there is a rapid refractive index change in the refractive index gradient structure layer. For example, reflection of 1% may be caused by the rapid refractive index change in the refractive index gradient structure layer. In this case, it is preferable to set a difference between the refractive indexes with substantially the same reflection intensities at the boundary positions z₁ and z₂. For example, when the refractive index of the substrate is 1.84, in order to obtain a reflection intensity of 1%, the difference between the refractive indexes of about 0.3 is necessary.

Fig. 6 shows a third example of the refractive index profile of the optical member of the present invention.

Similar to the above-mentioned refractive index profile of the first example, in either the profile g or h of the refractive index profiles n₂(z) of the interference layer shown in Fig. 6, refractive index relationships at the boundary positions satisfy n₂(z₂)≠n₃, n₂(z₁)≠n₂(z₂), and n₁(z₁)<n₃. However, the third example is different from the first example in that n₂(z₁)<n₂(z₂). In the present invention, the refractive index profile n₂(z) shown in Fig. 6 may be used if there is provided an interference layer with discreteness at the boundary positions.

However, if n₁(z₁)<n₃, as shown in Figs. 2 and 3, it is preferable that the refractive index profile satisfies n₂(z₁)>n₂(z₂) since there is an effect of preventing light from being reflected (refer to examples to be described later).

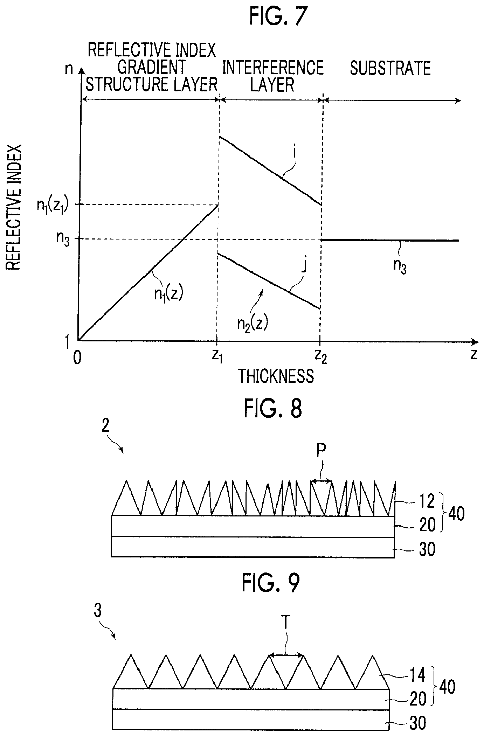

Fig. 7 shows a fourth example of the refractive index profile of the optical member of the present invention.

Similar to the above-mentioned refractive index profile of the second example, in either the profile i or j of the refractive index profiles n₂(z) of the interference layer shown in Fig. 7, refractive index relationships at the boundary positions satisfy n₂(z₂)≠n₃, n₂(z₁)≠n₂(z₂), and n₁(z₁)>n₃. However, the fourth example is different from the second example in that n₂(z₁)>n₂(z₂). In the present invention, the refractive index profile n₂(z) shown in Fig. 7 may be used if there is provided an interference layer with discreteness at the boundary positions.

However, if n₁(z₁)>n₃, as shown in Figs. 4 and 5, it is preferable that the refractive index profile satisfies n₂(z₁)<n₂(z₂) since there is an effect of preventing light from being reflected.

The transparent substrate 30 may be made of glass or plastic. Here, the "transparent" means that the substrate is transparent (with an internal transmittance of approximately 10% or more) to a wavelength of light (not-to-be-reflected light) to be prevented from being reflected in the optical member.

When satisfying the profile, the interference layer 20 may be made of any material in any deposition method.

For example, the layer can be obtained by forming a thin film in a vacuum deposition method of gradually changing a mixture ratio of three type elements. Specifically, SiOₓN_{y} is deposited by gradually changing a ratio of x and y through a reactive sputtering method, whereby it is possible to obtain an interference layer of which a refractive index gradually changes in the thickness direction. Alternatively, a film of mixture between SiO₂ and TiOₓ is deposited by gradually changing a mixture ratio between SiO₂ and TiOₓ through a metal mode sputtering method, whereby it is possible to obtain an interference layer of which a refractive index gradually changes in the thickness direction. Further, by coating substrate with a plurality of solutions with different refractive indexes in another method, it is possible to obtain an interference layer that causes change to a desired refractive index in the thickness direction. Examples of the coating method include a spin coating method, a dip coating method, a spray coating method, an ink jet method, and the like.

The refractive index gradient structure layer 10 may be made of any material in any deposition method if a refractive index thereof gradually increases in a direction from the surface of the optical member toward the transparent substrate.

For example, it is possible to use a fine uneven structure which has been known as the refractive index gradient structure layer 10 in the related art. An anti-reflection effect of the fine uneven structure is derived by continuous change of an effective refractive index. Thus, it is possible to obtain anti-reflection characteristics throughout a wide angle of incident light and a wide wavelength range.

It is preferable that a size of the fine uneven structure is smaller than the wavelength of the not-to-be-reflected light. For example, as the fine uneven structure used in anti-reflection for visible light, it is possible to use an array of protrusions, an array of recessions, an array of particulates having periods of 100 nm to 300 nm, and random protrusions, random recessions, a random-shaped crystal structure, and randomly arranged particulates having structure sizes of about 100 nm to 300 nm.

Figs. 8 and 9 are schematic sectional views of optical members 2 and 3 of first and second embodiments. Here, the refractive index gradient structure layer 10 is formed to have the fine uneven structure.

The fine uneven structure may be, as shown in the schematic sectional view of the first embodiment of Fig. 8, a fine uneven structure 12 which is transparent and has fine unevenness with a pitch P shorter than a wavelength of the not-to-be-reflected light. The pitch P between convex portions of the fine unevenness is not necessarily constant if it is shorter than the wavelength of the not-to-be-reflected light, and the structure may have a shape in which concave and convex portions are randomly arranged. Such a fine uneven structure 12 can be manufactured in a method such as a hydrothermal treatment performed on an aluminum compound.

The fine uneven structure may be, as shown in the schematic sectional view of the second embodiment of Fig. 9, a fine uneven structure 14 which is transparent and has fine unevenness with a period T shorter than a wavelength of the not-to-be-reflected light. The fine uneven structure 14 is continuously formed with the period T. Such a fine uneven structure 14 can be manufactured through a method such as nanoimprinting or an electron beam lithography.

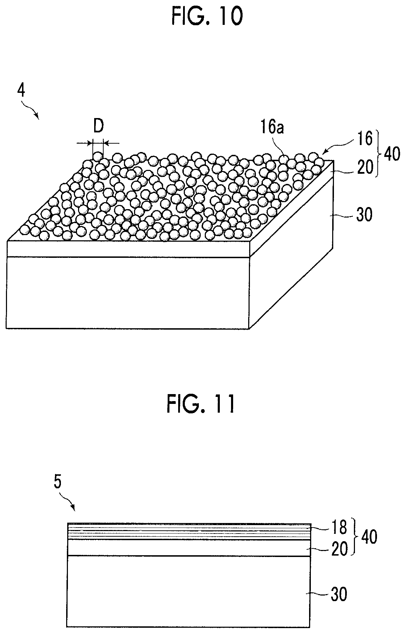

As shown in Fig. 10 which is a schematic perspective view of an optical member 4 of a third embodiment, the refractive index gradient structure layer 10 may be formed of a particulate layer 16 on which transparent particulates 16a with sizes smaller than the wavelength of the not-to-be-reflected light are randomly arranged. If each transparent particulate is spherical as shown in the present example, it is preferable that a diameter D is smaller than the wavelength of the not-to-be-reflected light. The transparent particulate 16a is formed of, for example, hollow silica.

The refractive index gradient structure layer 10 is not limited to a layer using the fine uneven structure, and may be a refractive index gradient thin film layer 18 of which a refractive index monotonically increases in a direction from a position far from the transparent substrate toward a position close to the transparent substrate, as shown in Fig. 11 which is a schematic sectional view of an optical member 5 of a fourth embodiment. Similar to the above-mentioned interference layer, in such a refractive index gradient thin film layer 18, using, for example, a SiOₓN_{y} film formed through reactive sputtering and a film of mixture between SiO₂ and TiOₓ formed through metal mode sputtering, a refractive index gradient film having refractive index range from the same refractive index of the substrate to a refractive index of about 1.45 can be obtained, and by mixing for example MgF₂ and SiO₂ and depositing those thereon, a refractive index gradient film having refractive index range to a refractive index of about 1.37 can be obtained.

Meanwhile, the inventors of the present invention found that there is a problem in the following point. In the refractive index gradient structure layer of which the refractive index gradually increases, if a rate of change in refractive index is rapid, the change in refractive index is not regarded as effectively continuous change, and reflection of a certain degree (of 0.5% or more) occurs.

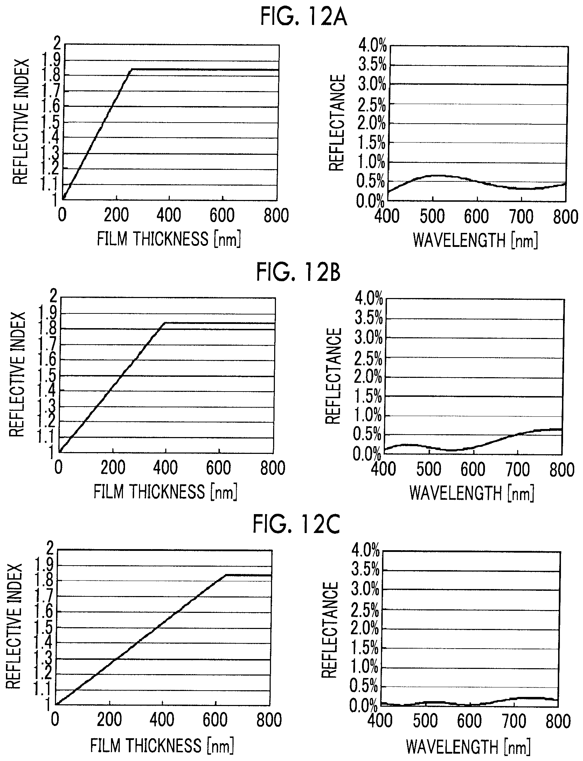

Referring to Figs. 12A, 12B and 12C, the refractive index profile and occurrence of the reflected light will be described. Figs. 12A, 12B and 12C are graphs indicating profiles, in which refractive indexes gradually increase until the refractive indexes are the same as that of the substrate, and refractive index distribution of three patterns, which have different slopes of the refractive index changes, and simulation results of reflectances in those cases.

In Fig. 12A, the refractive index monotonically increases in a range of a thickness of the refractive index gradient region Δd=250 nm, and a difference between the minimum value and the maximum value of the refractive index is Δn=0.84. When the not-to-be-reflected light is set as visible light of approximately 400 nm to 700 nm, a rate of change in refractive index at a maximum wavelength λ of 700 nm of the not-to-be-reflected light is λ×Δn/Δd=2.4. At this time, a maximum reflectance at a wavelength of 400 nm to 700 nm is 0.7%.

In Fig. 12B, the refractive index monotonically increases in the range of the thickness of the refractive index gradient region Δd=387.5 nm, and the difference between the minimum value and the maximum value of the refractive index is Δn=0.84. When the not-to-be-reflected light is set as visible light of approximately 400 nm to 700 nm, the rate of change in refractive index at the maximum wavelength λ of 700 nm of the not-to-be-reflected light is λ×Δn/Δd=1.5. At this time, the maximum reflectance at the wavelength of 400 nm to 700 nm is 0.5%.

In Fig. 12C, the refractive index monotonically increases in a range of a thickness of the refractive index gradient region Δd=630 nm, and a difference between the minimum value and the maximum value of the refractive index is Δn=0.84. When the not-to-be-reflected light is set as visible light of approximately 400 nm to 700 nm, the rate of change in refractive index at the maximum wavelength λ of 700 nm of the not-to-be-reflected light is λ×Δn/Δd=0.9. At this time, the maximum reflectance at the wavelength of 400 nm to 700 nm is 0.2%.

As a result of the simulation, it was discovered that, as the rate of change in refractive index becomes rapider, the reflectance becomes larger. It is preferable that the reflectance of the anti-reflection film is less than 0.5% throughout the entire wavelength region of the not-to-be-reflected light. Hence, in a manner similar to the examples shown in the upper side and the middle, the present specification defines that the refractive index gradient layer, which has the rate of change in refractive index at the maximum reflectance equal to or greater than 0.5%, that is, the rate of change in refractive index of λ×Δn/Δd≥1.5, cannot be regarded as a perfect moth-eye structure. In addition, when the rate of change in refractive index at the maximum wavelength of the not-to-be-reflected light satisfies the above-mentioned expression, as a matter of course, the rate of change in refractive index at a different wavelength shorter than that satisfies the above-mentioned expression.

Although the description is based on the simulation, in practice, when a part of the refractive index gradient region is configured to have the fine uneven structure, the refractive index of the refractive index gradient structure layer on the side closest to the substrate is not limited to be equal to that of the substrate. Hence, as described in sections in the related art, there is proposed a configuration in which the interlayer or the refractive index gradient layer for connecting both refractive indexes of the refractive index gradient structure layer and the substrate is provided therebetween.

According to the configuration in the related art, at the gentle rate of change in refractive index shown in Fig. 12C, this configuration is a perfect moth-eye structure. As a result, it was discovered that it is possible to minimize the reflected light to 0.2%.

However, in this case, it is necessary to set the thickness of the refractive index gradient portion to 630 nm which is extremely thick. Thus, there is a problem in that, when such a thickness is set through only the fine uneven structure, durability deteriorates. Meanwhile, even in a combination of the refractive index gradient layer, it is necessary to increase the thickness. Thus, there is a problem in that appropriateness for manufacturing deteriorates.

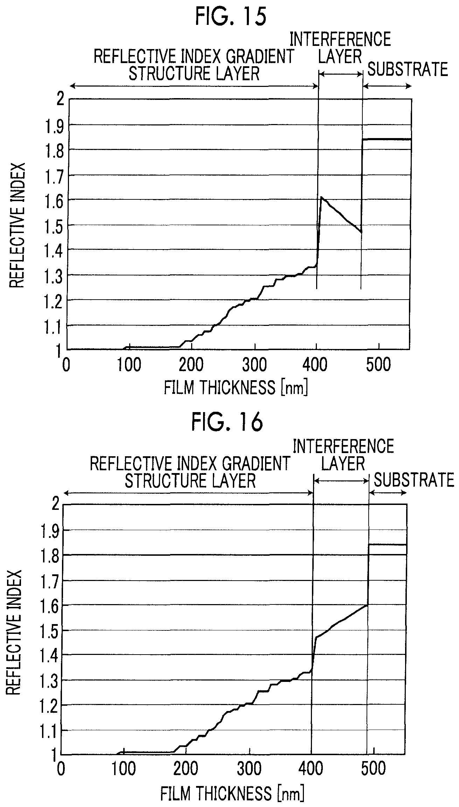

The rate of change in refractive index of the actual fine uneven structure is not necessarily constant throughout the entire range in the thickness direction, and may minutely increase and decrease (refer to Fig. 15 and the like to be described later). If there is a portion of which a refractive index rapidly changes and which satisfies the rate of change in refractive index of λ×Δn/Δd≥1.5, a reflectance of the portion is equal to or greater than 0.5%.

In the present invention, by inserting the above-mentioned interference layer between the refractive index gradient structure layer and the substrate, it is possible to obtain an effect of reducing the thickness of the entire anti-reflection film. Thus, when there is provided the refractive index gradient structure layer having a portion in which the rate of change in refractive index is λ×Δn/Δd≥1.5, by increasing an amplitude of thin-film-interference light which cancels the reflected light generated in the refractive index gradient structure layer, it is possible to obtain wideband anti-reflection characteristics with a smaller thickness of the refractive index gradient thin film.

### Examples

Hereinafter, specific examples and comparative examples of the present invention will be described. In the following description, optical simulations are based on a method described in "Basic Theory of Optical Thin Film (Kobiyama Mitsunobu), Optronics Co. (2011)". Here, wavelength dispersion of the refractive index was not considered, and values at the e-line (546.1 nm) of the Fraunhofer lines were used.

### [Comparative Example 1]

First, Comparative Example 1, in which an anti-reflection film in the related art is provided, will be described.

Optical simulations using the following configuration were performed: an anti-reflection film employs a glass substrate (S-LAH55V made by Ohara Inc.) as a transparent substrate, and includes a boehmite film that has a fine uneven structure, which can be obtained by performing hydrothermal treatment on an alumina film, and a refractive index gradient film that has a refractive index change which gently connects the refractive indexes of the boehmite film and the glass substrate.

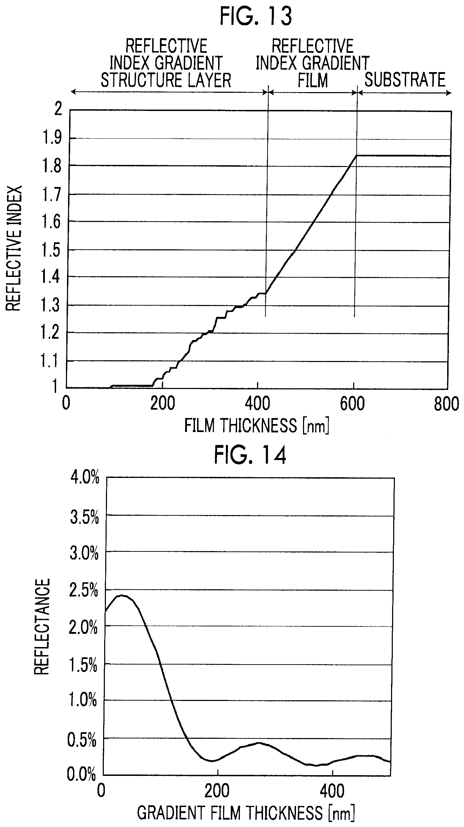

A refractive index profile of Comparative Example 1 is shown in Fig. 13. As shown in Fig. 13, a refractive index of the refractive index gradient film on the side close to the substrate is equal to that of the substrate, and a refractive index thereof on a side close to the fine uneven structure is equal to that of the boehmite film which is an adjacent fine uneven structure. In the present simulation, as the refractive index profile of the fine uneven structure of Fig. 13, values, which can be obtained from values measured by the spectroscopic ellipsometry of the boehmite film, are used. The boehmite film is produced by forming alumina film of 40 nm through electron cyclotron sputtering (AFTEX 6000 made by MES Afty Co.) and dipping the film in boiling water for five minutes so as to thereby perform hot water treatment on the film.

A result of the optical simulation performed on the optical member with such a refractive index profile is shown in Fig. 14. In the simulation, as indicators of the anti-reflection, the reflectance of light with a wavelength of 540 nm and the gradient film thickness are used. As can be seen from Fig. 14, in order to obtain a favorable anti-reflection performance of a reflectance of less than 0.5%, a gradient film thickness of at least about 200 nm is necessary. This corresponds to the description of the condition in which the above-mentioned perfect moth-eye structure is formed first.

### [Example 1]

In Example 1, an optical member, which has a layer configuration shown in Fig. 8 and a refractive index profile shown in Fig. 15, was manufactured in the following method. In Example 1, the following conditions of the first example of the above-mentioned refractive index profile of the present invention are satisfied: n₂(z₂)≠n₃; n₂(z₁)≠n₂(z₂); n₁(z₁)<n₃; and n₂(z₁)>n₂(z₂).

Using a glass substrate (S-LAH55V made by Ohara Inc.: n₃=1.84) as the transparent substrate 30, the interference layer 20, which is formed of silicon oxynitride thin film (SiOₓN_{y} film) and of which the refractive index gradually changes, was formed on the glass substrate through the electron cyclotron sputtering (AFTEX 6000 made by MES Afty Co.). By adjusting a ratio of mixture of oxygen gas and nitrogen gas at the time of sputtering so as to change a ratio of composition of oxygen and nitrogen in silicon oxynitride, the refractive index of the interference layer was adjusted.

In distribution of the refractive index shown in the interference layer region of Fig. 15 in the thickness direction, the refractive index is 1.47 at a position (position z₂) closest to the substrate, is 1.61 at a position (position z₁) farthest from the substrate, and continuously and gradually changes up to a thickness of 70 nm. In order to achieve the distribution, the interference layer 20 was formed of 15 divided thin film layers each having a thickness of 4.7 nm. The layers were sequentially formed in increments of the refractive index of 0.01 under a condition where the refractive index of each layer is a predetermined value.

Thereafter, the alumina film of 40 nm was formed through the electron cyclotron sputtering.

The glass substrate, on which the thin film was formed, was dipped into the boiling water for five minutes, thereby performing the hot water treatment on the substrate. After the hot water treatment, the alumina film as a top layer became an uneven boehmite layer having a film thickness of 250 nm. This uneven boehmite is the fine uneven structure 12. The refractive index of the fine uneven structure 12 was measured by a spectroscopic ellipsometer. In the refractive index gradient structure layer region of the refractive index profile of Fig. 15, refractive index distribution, which can be obtained from measurement, appears in the fine uneven structure portion.

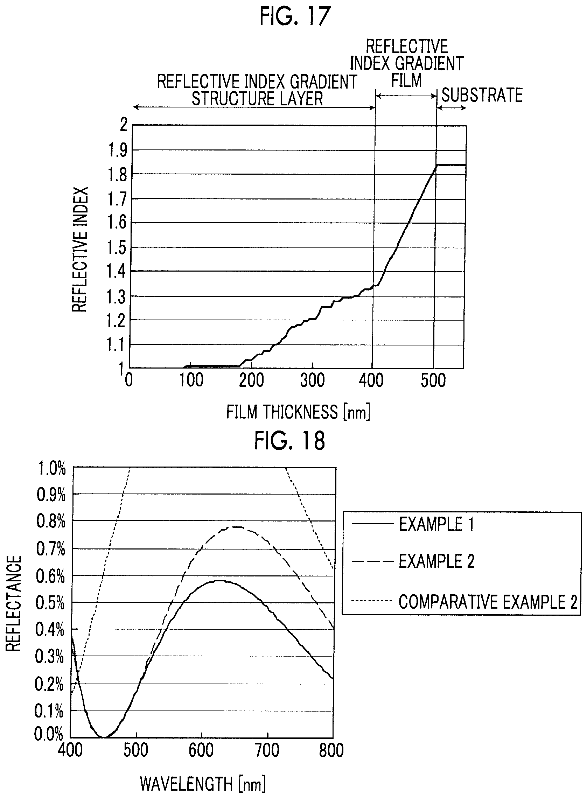

The rate of change in refractive index of the fine uneven structure 12 is not constant. In a portion where the change in refractive index is rapid, the rate of change in refractive index λ×Δn/Δd at the maximum wavelength λ of 700 nm in a not-to-be-reflected light wavelength region (here, the region is assumed as a region of visible light of 450 nm to 700 nm) is greater than 2. That is, the change in refractive index of the fine uneven structure 12 is not sufficiently smooth, and corresponds to an imperfect moth-eye structure. A result of the simulation of the reflectance of the optical member of Example 1 is shown in Fig. 18 to be described later.

### [Example 2] (Not covered by the invention as claimed)

In Example 2, an optical member, which has a configuration shown in Fig. 8 and a refractive index profile shown in Fig. 16, was manufactured in the following method. In Example 2, the following conditions of the third example of the above-mentioned refractive index profile of the present invention are satisfied: n₂(z₂)≠n₃; n₂(z₁)≠n₂(z₂); n₁(z₁)<n₃; and n₂(z₁)<n₂(z₂).

Using a glass substrate (S-LAH55V made by Ohara Inc.) as the transparent substrate 30, the interference layer 20, which is formed of silicon oxynitride thin film (SiOₓN_{y} film) and of which the refractive index gradually changes, was formed on the glass substrate through the electron cyclotron sputtering (AFTEX 6000 made by MES Afty Co.). By adjusting a ratio of mixture of oxygen gas and nitrogen gas at the time of sputtering so as to change a ratio of composition of oxygen and nitrogen in silicon oxynitride, the refractive index of the interference layer was adjusted.

In distribution of the refractive index shown in the interference layer region of Fig. 16 in the thickness direction, the refractive index is 1.60 at the position (position z₂) closest to the substrate, is 1.47 at the position (position z₁) farthest from the substrate, and continuously and gradually changes up to a thickness of 88 nm. In order to achieve the distribution, the interference layer 20 was formed of 14 divided thin film layers each having a thickness of 6.3 nm. The layers were sequentially formed in increments of the refractive index of 0.01 under a condition where the refractive index of each layer is a predetermined value.

Thereafter, in a manner similar to that of Example 1, the alumina film of 40 nm was formed through the electron cyclotron sputtering. The glass substrate, on which the thin film was formed, was dipped into the boiling water for five minutes, thereby performing the hot water treatment on the substrate. After the hot water treatment, the alumina film as a top layer became an uneven boehmite layer having a film thickness of 250 nm. This uneven boehmite is the fine uneven structure 12. The refractive index of the fine uneven structure 12 was measured by a spectroscopic ellipsometer. In the refractive index gradient structure layer region of the refractive index profile of Fig. 16, refractive index distribution, which can be obtained from measurement, appears in the fine uneven structure portion.

The rate of change in refractive index of the fine uneven structure 12 is not constant. In a portion where the change in refractive index is rapid, the rate of change in refractive index λ×Δn/Δd at the maximum wavelength λ of 700 nm in a not-to-be-reflected light wavelength region (here, the region is assumed as a region of visible light of 450 nm to 700 nm) is greater than 2. That is, the change in refractive index of the fine uneven structure 12 is not sufficiently smooth, and corresponds to the imperfect moth-eye structure. A result of the simulation of the reflectance of the optical member of Example 2 is shown in Fig. 18 to be described later.

### [Comparative Example 2]

In a manner similar to that of Comparative Example 1, optical simulations using the following configuration were performed: an anti-reflection film employs a glass substrate (S-LAH55V made by Ohara Inc.) as a transparent substrate, and includes a boehmite film that has a fine uneven structure, which can be obtained by performing hydrothermal treatment on an alumina film, and a refractive index gradient film that has a refractive index change which gently connects the refractive indexes of the boehmite film and the glass substrate.

A refractive index profile of Comparative Example 2 is shown in Fig. 17. Here, in order to compare with the case of Example 2 where the interference layer is provided, it is necessary to set a condition similar to the film thickness of the interference layer of Example 2. Accordingly, the film thickness of the refractive index gradient film is set to 102 nm.

Fig. 18 shows results of simulations of reflectances of the optical members of Example 1, Example 2, and Comparative Example 2 in the assumed wavelength region (here, 450 nm to 700 nm) of the not-to-be-reflected light.

It is apparent that the reflectances of the optical members of Examples 1 and 2 having the interference layer are sufficiently reduced as compared with that of Comparative Example 2.

It was discovered that Example 1 shows a low reflectance at a small film thickness as compared with Example 2. In Examples and Comparative Examples, it can be inferred that it is also possible to obtain the same results by using, for example, a porous refractive index gradient film, which can be obtained through a sol-gel method from a mixture between magnesium fluoride and silica, as the fine uneven structure.

### [Example 3]

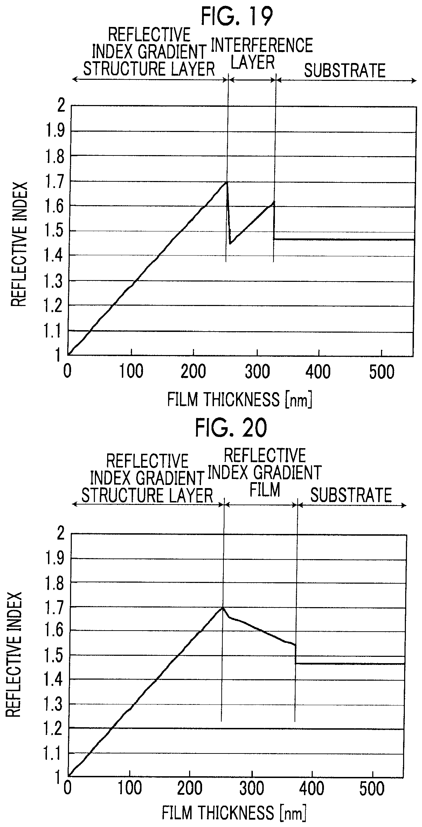

In Example 3, an optical member, which has a layer configuration shown in Fig. 9 and a refractive index profile shown in Fig. 19, was manufactured in the following method. In Example 3, the following conditions of the second example of the above-mentioned refractive index profile of the present invention are satisfied: n₂(z₂)≠n₃; n₂(z₁)≠n₂(z₂); n₁(z₁)>n₃; and n₂(z₁)<n₂(z₂).

An interference layer, which was formed of a mixture between silicon oxide and titanium oxide on the surface of the transparent substrate 30 by using synthetic quartz (n₃=1.46) as the transparent substrate 30, was formed through metal mode sputtering in which deposition rates for the respective materials were adjusted.

In distribution of the refractive index shown in the interference layer region of Fig. 19 in the thickness direction, the refractive index is 1.70 at the position (position z₂) closest to the substrate, is 1.45 at the position (position z₁) farthest from the substrate, and continuously and gradually changes up to a thickness of 75 nm. In order to achieve the distribution, the interference layer 20 was formed of 13 divided thin film layers each having a thickness of 5.8 nm. The layers were sequentially formed in increments of the refractive index of 0.02 under a condition where the refractive index of each layer is a predetermined value.

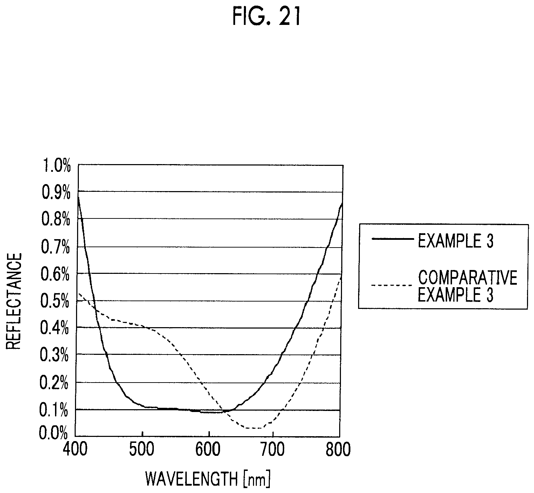

Thereafter, as the refractive index gradient structure layer, a fine uneven structure 14 was formed on the interference layer 20. In the structure, cones with heights of 250 nm were made of photo-curable resin with refractive index 1.7 disclosed in Patent Document WO05/014696 and were two-dimensionally arranged with a period (T) of 250 nm, through a UV light imprinting method. In this conic fine uneven structure, the rate of change in refractive index Δ×Δn/Δd at the maximum wavelength λ of 700 nm in the not-to-be-reflected light wavelength region (here, the region is assumed as a region of visible light of 450 nm to 700 nm) is greater than 1.9. Consequently, the change in refractive index of the conic fine uneven structure is rapid, and corresponds to the imperfect moth-eye structure. A result of the simulation of the reflectance of the optical member of Example 3 is shown in Fig. 21 to be described later.

### [Comparative Example 3]

In Comparative Example 3, an optical member, which has a refractive index gradient film instead of the interference layer of Example 3, was manufactured. The refractive index gradient film connects the refractive index of the substrate and the refractive index of the refractive index gradient structure layer on the side closest to the substrate. Fig. 20 shows a refractive index profile of Comparative Example 3.

In a manner similar to that of Example 3, a refractive index gradient film, which was formed of a mixture between silicon oxide and titanium oxide on the surface of the transparent substrate 30 by using synthetic quartz (n₃=1.46) as the transparent substrate 30, was formed through metal mode sputtering in which deposition rates for the respective materials were adjusted.

In distribution of the refractive index shown in the refractive index gradient film region of Fig. 20 in the thickness direction, the refractive index is 1.66 at the position closest to the substrate, is 1.54 at the position farthest from the substrate, and continuously and gradually changes up to a thickness of 120 nm. In order to achieve the distribution, the refractive index gradient film was formed of 13 divided thin film layers each having a thickness of 9.2 nm. The layers were sequentially formed in increments of the refractive index of 0.02 under a condition where the refractive index of each layer is a predetermined value.

Subsequently, in a manner similar to that of Example 1, the conic fine uneven structure 14 was formed.

Fig. 21 shows results of simulations of reflectances of the optical members of Example 3 and Comparative Example 3 in the assumed wavelength region (here, 450 nm to 700 nm) of the not-to-be-reflected light.

The reflectance of the optical member of Example 3 having the interference layer is reduced to 0.3% or less in the range of 450 nm to 700 nm as compared with that of Comparative Example 3, and is flat particularly in a range of 500 nm to 650 nm. Further, the interference layer of Example 3 exerts an effect of preventing light from being reflected with a film thickness smaller than that of the refractive index gradient film of Comparative Example 3. Thus, it is apparent that the present invention is more advantageous.

## Claims

1. An optical member comprising (1, 2, 3, 4, 5):
a transparent substrate (30); and
an anti-reflection film (40) that is formed on a surface of the transparent substrate (30),
wherein the anti-reflection film (40) includes a refractive index gradient structure layer (10) of which a refractive index gradually becomes larger at a position closer to the transparent substrate (30) in a thickness direction, and an interference layer (20) which is disposed between the refractive index gradient structure layer (10) and the transparent substrate (30) in order to prevent light from being reflected by an interference effect,
wherein a refractive index of the transparent substrate (30) is different from a refractive index of the refractive index gradient structure layer (10) on a side closest to the transparent substrate (30), and
wherein a refractive index of the interference layer (20) changes in the thickness direction, and has values which are discrete from both refractive indexes of the refractive index gradient structure layer (10) and the transparent substrate (30) at a boundary between the interference layer (20) and the refractive index gradient structure layer (10) and at a boundary between the interference layer (20) and the transparent substrate (30), and a value thereof on a side close to the refractive index gradient structure layer (10) is different from a value thereof on a side close to the transparent substrate (30), and
wherein in the interference layer (20), a refractive index at the boundary position between the interference layer (20) and the refractive index gradient structure layer (10) is smaller than a refractive index at the boundary position between the interference layer (20) and the transparent substrate (30),
**characterized in that**
the refractive index of the transparent substrate (30) is smaller than the refractive index of the refractive index gradient structure layer (10) on the side closest to the transparent substrate (30).

2. An optical member comprising (1, 2, 3, 4, 5):
a transparent substrate (30); and
an anti-reflection film (40) that is formed on a surface of the transparent substrate (30),
wherein the anti-reflection film (40) includes a refractive index gradient structure layer (10) of which a refractive index gradually becomes larger at a position closer to the transparent substrate (30) in a thickness direction, and an interference layer (20) which is disposed between the refractive index gradient structure layer (10) and the transparent substrate (30) in order to prevent light from being reflected by an interference effect,
wherein a refractive index of the transparent substrate (30) is different from a refractive index of the refractive index gradient structure layer (10) on a side closest to the transparent substrate (30),
wherein a refractive index of the interference layer (20) changes in the thickness direction, and has values which are discrete from both refractive indexes of the refractive index gradient structure layer (10) and the transparent substrate (30) at a boundary between the interference layer (20) and the refractive index gradient structure layer (10) and at a boundary between the interference layer (20) and the transparent substrate (30), and a value thereof on a side close to the refractive index gradient structure layer (10) is different from a value thereof on a side close to the transparent substrate (30), and
wherein the refractive index of the transparent substrate (30) is larger than the refractive index of the refractive index gradient structure layer (10) on the side closest to the transparent substrate (30),
**characterized in that**
in the interference layer (20), a refractive index at the boundary position between the interference layer (20) and the refractive index gradient structure layer (10) is larger than a refractive index at the boundary position between the interference layer (20) and the transparent substrate (30).

3. The optical member according to claim 1 or 2, wherein the refractive index gradient structure layer (10) has a part in which a relationship between a rate of change in refractive index, Δn/Δd, in the thickness direction and a wavelength of not-to-be-reflected light, λ, satisfies λ×Δn/Δd>1.5.

4. The optical member according to any one of claims 1 to 3, wherein the interference layer (20) is formed of three or more elements, a ratio of composition of the elements changes in the thickness direction, and the refractive index thereof changes in the thickness direction.

5. The optical member according to claim 1, wherein the interference layer (20) is formed of silicon oxynitride, a ratio of composition of oxygen and nitrogen changes in the thickness direction, and the refractive index thereof changes in the thickness direction.

6. The optical member according to claim 4, wherein the interference layer (20) is a layer in which silicon oxide and titanium oxide are mixed, a content ratio between the silicon oxide and the titanium oxide changes in the thickness direction, and the refractive index thereof changes in the thickness direction.

7. The optical member according to any one of claims 1 to 6, wherein the refractive index gradient structure layer (10) is formed of a transparent fine uneven structure (12, 14) which has fine unevenness with a pitch shorter than the wavelength of the not-to-be-reflected light.

8. The optical member according to any one of claims 1 to 6, wherein the refractive index gradient structure layer (10) is formed of a transparent fine uneven structure (14) which has fine unevenness with a period shorter than the wavelength of the not-to-be-reflected light.

9. The optical member according to any one of claims 1 to 6, wherein the refractive index gradient structure layer (10) is formed of a refractive index gradient thin film (18) of which a refractive index monotonically increases in a direction from a position far from the transparent substrate (30) toward a position close to the transparent substrate (30).

10. The optical member according to any one of claims 1 to 6, wherein the refractive index gradient structure layer (10) is formed of a particulate layer (16) in which transparent particulates (16a) with smaller sizes than the wavelength of the not-to-be-reflected light are randomly arranged.

## Patentansprüche

1. Optisches Element (1, 2, 3, 4, 5), umfassend:
ein transparentes Substrat (30); und
eine Antireflexionsschicht (40), die auf einer Oberfläche des transparenten Substrats (30) ausgebildet ist,
wobei die Antireflexionsschicht (40) eine Brechungsindex-Gradientenstrukturschicht (10) aufweist, deren Brechungsindex an einer Stelle näher dem transparenten Substrat (30) in einer Dickenrichtung allmählich zunimmt, und eine Interferenzschicht (20) enthält, die sich zwischen der Brechungsindex-Gradientenstrukturschicht (10) und dem transparenten Substrat (30) befindet, um zu verhindern, dass durch einen Interferenzeffekt Licht reflektiert wird,
wobei ein Brechungsindex des transparenten Substrats (30) verschieden ist von einem Brechungsindex der Brechungsindex-Gradientenstrukturschicht (10) auf einer Seite am nächsten zu dem transparenten Substrat (30), und
wobei ein Brechungsindex der Interferenzschicht (20) sich in der Dickenrichtung ändert und Werte aufweist, die sowohl von den Brechungsindizes der Brechungsindex-Gradientenstrukturschicht (10) als auch des transparenten Substrats (30) an einer Grenze zwischen der Interferenzschicht (20) und der Brechungsindex-Gradientenstrukturschicht (10) und an einer Grenze zwischen der Interferenzschicht (20) und dem transparenten Substrat (30) diskret sind, und von dem ein Wert an einer Seite nahe der Brechungsindex-Gradientenstrukturschicht (10) verschieden ist von seinem Wert auf einer Seite nahe dem transparenten Substrat (30), und
wobei in der Interferenzschicht (20) ein Brechungsindex an der Grenzstelle zwischen der Interferenzschicht (20) und der Brechungsindex-Gradientenstrukturschicht (10) kleiner ist als ein Brechungsindex an der Grenzstelle zwischen der Interferenzschicht (20) und dem transparenten Substrat (30),
**dadurch gekennzeichnet, dass**
der Brechungsindex des transparenten Substrats (30) auf der Seite nächstgelegen zu dem transparenten Substrat (30) kleiner ist als der Brechungsindex der Brechungsindex-Gradientenstrukturschicht (10).

2. Optisches Element (1, 2, 3, 4, 5), umfassend:
ein transparentes Substrat (30); und
eine Antireflexionsschicht (40), die auf einer Oberfläche des transparenten Substrats (30) ausgebildet ist,
wobei die Antireflexionsschicht (40) eine Brechungsindex-Gradientenstrukturschicht (10) aufweist, deren Brechungsindex an einer Stelle näher dem transparenten Substrat (30) in einer Dickenrichtung allmählich zunimmt, und eine Interferenzschicht (20) enthält, die sich zwischen der Brechungsindex-Gradientenstrukturschicht (10) und dem transparenten Substrat (30) befindet, um zu verhindern, dass durch einen Interferenzeffekt Licht reflektiert wird,
wobei ein Brechungsindex des transparenten Substrats (30) verschieden ist von einem Brechungsindex der Brechungsindex-Gradientenstrukturschicht (10) auf einer Seite am nächsten zu dem transparenten Substrat (30), und
wobei ein Brechungsindex der Interferenzschicht (20) sich in der Dickenrichtung ändert und Werte aufweist, die sowohl von den Brechungsindizes der Brechungsindex-Gradientenstrukturschicht (10) als auch des transparenten Substrats (30) an einer Grenze zwischen der Interferenzschicht (20) und der Brechungsindex-Gradientenstrukturschicht (10) und an einer Grenze zwischen der Interferenzschicht (20) und dem transparenten Substrat (30) diskret sind, und von dem ein Wert an einer Seite nahe der Brechungsindex-Gradientenstrukturschicht (10) verschieden ist von seinem Wert auf einer Seite nahe dem transparenten Substrat (30), und
wobei der Brechungsindex des transparenten Substrats (30) auf der Seite am nächsten zu dem transparenten Substrat (30) größer ist als der Brechungsindex der Brechungsindex-Gradientenstrukturschicht (10),
**dadurch gekennzeichnet, dass**
in der Interferenzschicht (20) ein Brechungsindex an der Grenzstelle zwischen der Interferenzschicht (20) und der Brechungsindex-Gradientenstrukturschicht (10) größer ist als ein Brechungsindex an der Grenzstelle zwischen der Interferenzschicht (20) und dem transparenten Substrat (30).

3. Optisches Element nach Anspruch 1 oder 2, bei dem die Brechungsindex-Gradientenstrukturschicht (10) einen Teil aufweist, in welchem eine Beziehung zwischen einer Änderungsrate im Brechungsindex Δn/Δd in der Dickenrichtung und eine Wellenlänge von nicht zu reflektierendem Licht λ der Beziehung λ x Δn/Δd > 1,5 ist.

4. Optisches Element nach einem der Ansprüche 1 bis 3, bei dem die Interferenzschicht (20) aus drei oder mehr Elementen gebildet ist, ein Zusammensetzungsverhältnis der Elemente sich in Dickenrichtung ändert, und ihr Brechungsindex sich in Dickenrichtung ändert.

5. Optisches Element nach Anspruch 1, bei dem die Interferenzschicht (20) aus Siliciumoxinitrid gebildet ist, ein Zusammensetzungsverhältnis von Sauerstoff und Stickstoff sich in Dickenrichtung ändert, und ihr Brechungsindex sich in Dickenrichtung ändert.

6. Optisches Element nach Anspruch 4, bei dem die Interferenzschicht (20) eine Schicht ist, in welcher Siliciumoxid und Titanoxid gemischt sind, ein Anteilsverhältnis zwischen dem Siliciumoxid und dem Titanoxid sich in der Dickenrichtung ändert, und ihr Brechungsindex sich in der Dickenrichtung ändert.

7. Optisches Element nach einem der Ansprüche 1 bis 6, bei dem die Brechungsindex-Gradientenstrukturschicht (10) gebildet ist aus einer transparenten, feinen und unebenen Struktur (12, 14) aufweist, die eine feine Unebenheit mit einem Mittenabstand kürzer als die Wellenlänge des nicht zu reflektierenden Lichts besitzt.

8. Optisches Element nach einem der Ansprüche 1 bis 6, bei der die Brechungsindex-Gradientenstrukturschicht (10) gebildet wird aus einer transparenten, feinen unebenen Struktur (14), die eine feine Unebenheit mit einer Periode kürzer als die Wellenlänge des nicht zu reflektierenden Lichts besitzt.

9. Optisches Element nach einem der Ansprüche 1 bis 6, bei dem die Brechungsindex-Gradientenstrukturschicht (10) gebildet wird aus einer Brechungsindex-Gradientendünnschicht (18), deren Brechungsindex von einer Stelle entfernt von dem transparenten Substrat (30) zu einer Stelle nahe dem transparenten Substrat (30) monoton zunimmt.

10. Optisches Element nach einem der Ansprüche 1 bis 6, bei dem die Brechungsindex-Gradientenstrukturschicht (10) gebildet wird durch eine Partikelschicht (16), in der transparente Partikel (16a) mit geringeren Größen als die Wellenlänge des nicht zu reflektierenden Lichts auf Zufallsbasis angeordnet sind.

## Revendications

1. Elément optique (1, 2, 3, 4, 5), comprenant :
un substrat transparent (30), et
un film antireflet (40), lequel est formé sur une surface du substrat transparent (30),
dans lequel le film antireflet (40) inclut une couche de structure à gradient d'indice de réfraction (10) dont l'indice de réfraction devient plus grand sur une position plus proche du substrat transparent (30) dans une direction d'épaisseur, et une couche interférentielle (20), laquelle est disposée entre la couche de structure à gradient d'indice de réfraction (10) et le substrat transparent (30) afin d'empêcher la réflexion de la lumière par un effet interférentiel,
dans lequel un indice de réfraction du substrat transparent (30) est différent d'un indice de réfraction de la couche de structure à gradient d'indice de réfraction (10) sur un côté le plus proche du substrat transparent (30),
dans lequel un indice de réfraction de la couche interférentielle (20) change dans la direction d'épaisseur, et présente des valeurs discrètes par rapport aux deux indices de réfraction de la couche de structure à gradient d'indice de réfraction (10) et du substrat transparent (30) sur une frontière entre la couche interférentielle (20) et la couche de structure à gradient d'indice de réfraction (10), et sur une frontière entre la couche interférentielle (20) et le substrat transparent (30), et une valeur de celui-ci sur un côté proche de la couche de structure à gradient d'indice de réfraction (10) est différente d'une valeur de celui-ci sur un côté proche du substrat transparent (30), et
dans lequel dans la couche interférentielle (20), un indice de réfraction sur la position de frontière entre la couche interférentielle (20) et la couche de structure à gradient d'indice de réfraction (10) est plus petit qu'un indice de réfraction sur la position de frontière entre la couche interférentielle (20) et le substrat transparent (30),
**caractérisé en ce que**
l'indice de réfraction du substrat transparent (30) est plus petit que l'indice de réfraction de la couche de structure à gradient d'indice de réfraction (10) sur le côté le plus proche du substrat transparent (30).

2. Elément optique (1, 2, 3, 4, 5), comprenant :
un substrat transparent (30), et
un film antireflet (40), lequel est formé sur une surface du substrat transparent (30),
dans lequel le film antireflet (40) inclut une couche de structure à gradient d'indice de réfraction (10) dont l'indice de réfraction devient plus grand sur une position plus proche du substrat transparent (30) dans une direction d'épaisseur, et une couche interférentielle (20), laquelle est disposée entre la couche de structure à gradient d'indice de réfraction (10) et le substrat transparent (30) afin d'empêcher la réflexion de la lumière par un effet interférentiel,
dans lequel un indice de réfraction du substrat transparent (30) est différent d'un indice de réfraction de la couche de structure à gradient d'indice de réfraction (10) sur un côté le plus proche du substrat transparent (30),
dans lequel un indice de réfraction de la couche interférentielle (20) change dans la direction d'épaisseur, et présente des valeurs discrètes par rapport aux deux indices de réfraction de la couche de structure à gradient d'indice de réfraction (10) et du substrat transparent (30) sur une frontière entre la couche interférentielle (20) et la couche de structure à gradient d'indice de réfraction (10), et sur une frontière entre la couche interférentielle (20) et le substrat transparent (30), et une valeur de celui-ci sur un côté proche de la couche de structure à gradient d'indice de réfraction (10) est différente d'une valeur de celui-ci sur un côté proche du substrat transparent (30), et
dans lequel l'indice de réfraction du substrat transparent (30) est plus grand que l'indice de réfraction de la couche de structure à gradient d'indice de réfraction (10) sur le côté le plus proche du substrat transparent (30),
**caractérisé en ce que**
dans la couche interférentielle (20), un indice de réfraction sur la position de frontière entre la couche interférentielle (20) et la couche de structure à gradient d'indice de réfraction (10) est plus grand qu'un indice de réfraction sur la position de frontière entre la couche interférentielle (20) et le substrat transparent (30).

3. Elément optique selon la revendication 1 ou 2, dans lequel la couche de structure à gradient d'indice de réfraction (10) présente une partie où une relation entre une vitesse de changement de l'indice de réfraction, Δn/Δd, dans la direction d'épaisseur et une longueur d'onde de lumière ne devant pas être réfléchie, λ, satisfait λ x Δn/Δd > 1,5.

4. Elément optique selon l'une quelconque des revendications 1 à 3, dans lequel la couche interférentielle (20) est formée de trois éléments ou plus ; un rapport de composition des éléments change dans la direction d'épaisseur, et l'indice de réfraction de celui-ci change dans la direction d'épaisseur.

5. Elément optique selon la revendication 1, dans lequel la couche interférentielle (20) est formée d'oxynitrure de silicium ; un rapport de composition pour l'oxygène et l'azote change dans la direction d'épaisseur, et l'indice de réfraction de celui-ci change dans la direction d'épaisseur.

6. Elément optique selon la revendication 4, dans lequel la couche interférentielle (20) est une couche où de l'oxyde de silicium et de l'oxyde de titane sont mélangés ; un rapport de teneur entre l'oxyde de silicium et l'oxyde de titane change dans la direction d'épaisseur, et l'indice de réfraction de celui-ci change dans la direction d'épaisseur.

7. Elément optique selon l'une quelconque des revendications 1 à 6, dans lequel la couche de structure à gradient d'indice de réfraction (10) est formée d'une structure inégale fine et transparente (12, 14), laquelle présente une inégalité fine avec un pas plus court que la longueur d'onde de la lumière ne devant pas être réfléchie.

8. Elément optique selon l'une quelconque des revendications 1 à 6, dans lequel la couche de structure à gradient d'indice de réfraction (10) est formée d'une structure inégale fine et transparente (14), laquelle présente une inégalité fine avec une période plus courte que la longueur d'onde de la lumière ne devant pas être réfléchie.

9. Elément optique selon l'une quelconque des revendications 1 à 6, dans lequel la couche de structure à gradient d'indice de réfraction (10) est formée d'un film mince de gradient d'indice de réfraction (18) dont l'indice de réfraction augmente de manière monotone dans une direction allant d'une position éloignée du substrat transparent (30) vers une position proche du substrat transparent (30).

10. Elément optique selon l'une quelconque des revendications 1 à 6, dans lequel la couche de structure à gradient d'indice de réfraction (10) est formée d'une couche particulaire (16) où des particules transparentes (16a) présentant des tailles plus petites que la longueur d'onde de la lumière ne devant pas être réfléchie sont agencées de manière aléatoire.
